(19) Europäisches Patentamt / European Patent Office / Office européen des brevets

(11) **EP 3 721 107 B1**

(12) **EUROPÄISCHE PATENTSCHRIFT**

(45) Veröffentlichungstag und Bekanntmachung des Hinweises auf die Patenterteilung:
**29.12.2021 Patentblatt 2021/52**

(21) Anmeldenummer: **18803581.0**

(22) Anmeldetag: **06.11.2018**

(51) Int Cl.:
*B22F 1/00* (2006.01)  *B22F 3/26* (2006.01)
*B22F 7/00* (2006.01)  *B22F 7/02* (2006.01)
*B22F 7/08* (2006.01)  *B22F 3/24* (2006.01)
*B22F 7/04* (2006.01)  *C22C 1/04* (2006.01)
*F16C 33/20* (2006.01)

(86) Internationale Anmeldenummer:
**PCT/EP2018/080355**

(87) Internationale Veröffentlichungsnummer:
**WO 2019/110225 (13.06.2019 Gazette 2019/24)**

(54) **GLEITLAGERVERBUNDWERKSTOFF UND VERFAHREN ZU DESSEN HERSTELLUNG SOWIE GLEITLAGERELEMENT**

SLIDING BEARING COMPOSITE MATERIAL AND METHOD FOR THE PRODUCTION THEREOF AND SLIDING BEARING

MATERIAUX COMPOSITE DE PALIER COULISSANT ET SON PROCÉDÉ DE FABRICATION ET PALIER COULISSANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.12.2017 DE 102017128908**

(43) Veröffentlichungstag der Anmeldung:
**14.10.2020 Patentblatt 2020/42**

(73) Patentinhaber: **KS Gleitlager GmbH**
**68789 St. Leon-Rot (DE)**

(72) Erfinder:
• **TAIPALUS, Riitta**
  **67117 Limburgerhof (DE)**
• **REINICKE, Rolf**
  **76669 Bad Schoenborn (DE)**
• **DICK, Steffen**
  **67659 Kaiserslautern (DE)**

(74) Vertreter: **DREISS Patentanwälte PartG mbB**
**Friedrichstraße 6**
**70174 Stuttgart (DE)**

(56) Entgegenhaltungen:
EP-A1- 0 581 185    EP-A1- 2 400 175
GB-A- 2 356 226     JP-A- 2013 083 304
US-A- 3 376 183

**Beschreibung**

Die Erfindung betrifft einen Gleitlagerverbundwerkstoff mit einer metallischen Stützschicht, insbesondere aus Stahl oder aus einer Kupferlegierung, mit einer porösen Trägerschicht, insbesondere aus Bronze, vorzugsweise aus bleifreier Bronze, und mit einem Gleitschichtmaterial auf Polymerbasis, gegebenenfalls mit die tribologischen Eigenschaften beeinflussenden Füllstoffen, welches in die poröse Trägerschicht einimprägniert ist und einen Überstand über die poröse Trägerschicht bildet, wobei die Trägerschicht eine Sinterschicht ist, die aus miteinander und mit der Stützschicht versinterten Partikeln gebildet ist.

Derartige Gleitlagerverbundwerkstoffe sind in großem Umfang bekannt geworden und finden insbesondere im Automobilbereich in zumeist gerollten Gleitlagerbuchsen oder Gleitlagerschalen zur Lagerung einer Welle, eines Schwenkzapfens oder eines Hebels Verwendung. Auch kalottenförmige Gleitlagerelemente oder ebene Anlaufscheiben lassen sich hieraus herstellen. Ein aus dem Gleitlagerverbundwerkstoff in Buchsenform oder Schalenform gebrachtes Gleitlagerelement ist typischerweise in einer Aufnahmeöffnung aufgenommen, und zwar typischerweise darin eingepresst oder durch Gehäuseteile eingeklemmt, so dass das Gleitlagerelement im Betriebszustand gegenüber der Gehäuseöffnung verdrehsicher gehalten ist. Um die hierfür erforderlichen Kräfte aufzunehmen, ist eine gewisse Stärke oder Dicke des Gleitlagerelements insgesamt und dessen Stützschicht erforderlich, die insbesondere auch vom Durchmesser des Gleitlagerelements abhängig ist. Je größer die Materialdicke, desto größer sind die Kräfte, die aufgenommen werden können und desto sicherer ist ein Festsitz des Gleitlagerelements im Betrieb erreichbar. Des Weiteren ist ein sicherer Halt des Gleitschichtmaterials auf Polymerbasis an der porösen Trägerschicht wesentlich. Diesbezüglich muss für eine ausreichende Verklammerung zwischen dem Gleitschichtmaterial und der porösen Trägerschicht gesorgt werden, was wiederum ein dreidimensional hintergreifbares Aufnahmevolumen bei der porösen Trägerschicht verlangt. Schließlich ist es aber auch erforderlich, dass der Gleitlagerverbundwerkstoff insgesamt auf wirtschaftliche Weise herstellbar ist, so dass der Anteil kostenintensiver Materialien, wie insbesondere Bronze, pro Flächeneinheit des Gleitlagerverbundwerkstoffs möglichst gering gehalten werden soll.

Es wurde bereits mit EP 2 787 227 B1 der Vorschlag unterbreitet, zur Bildung der porösen Trägerschicht Pulver mit sehr geringer Partikelgröße von 15 bis 60 μm, vorzugsweise von 25 bis 45 μm, zu verwenden und gleichzeitig die Dicke der porösen Trägerschicht auf 60 bis 100 μm zu reduzieren. Hierdurch sollen der Verschleißwiderstand und auch die Belastbarkeit erhöht werden können, wobei auch darauf hingewiesen wird, dass die Dicke der porösen Trägerschicht wenigstens 2 Pulverpartikellagen umfassen soll. Hierdurch soll dann wohl ein hinreichender Hintergriff des in die dreidimensional poröse Trägerschicht einimprägnierten Gleitschichtmaterials erreicht werden.

DE 10 2004 008 633 A1 beschreibt einen Gleitlagerverbundwerkstoff der eingangs genannten Art, bei dem die die poröse Trägerschicht bildenden Partikel zur Erzielung eines möglichst großen Porenvolumens aus spratzigen Partikeln einer durchweg unregelmäßigen oder irregulären unrunden Geometrie mit kantigen und bizarren Bereichen gebildet sind. Dies mag bei eher dicken Trägerschichten von deutlich über 200 μm Dicke für den intendierten Zweck Vorteile mit sich bringen; es gestaltet sich aber als sehr schwierig, bei kleineren Schichtdicken eine qualitativ hochwertige Trägerschicht herzustellen, und zwar insbesondere, wenn die Gleitschicht nur als verhältnismäßig dünne Einlaufschicht mit geringem Überstand ausgebildet werden soll.

WO 2012/162258 A1 beschreibt ein Gleitschichtmaterial auf PTFE-Basis mit die tribologischen Eigenschaften beeinflussenden Füllstoffen, welches auf eine Bronze-Trägerschicht aufgebracht ist, die auf eine Stahl-Stützschicht aufgebracht ist. Als Dicke einer Gleitschicht ist 1 bis 125 μm angegeben, als Dicke der Bronze-Trägerschicht ist eine Dicke von 50 bis 200 μm angegeben, und als Dicke der Stahlschicht ist 0,25 bis 3,5 mm angegeben. Angaben zur Partikelgröße bei Ausbildung der Bronze-Trägerschicht als Sintermetallschicht sind nicht ersichtlich.

US 3,376,183 A beschreibt einen Gleitlagerverbundwerkstoff der eingangs genannten Art mit einer Schichtdicke der porösen Trägerschicht von 127 μm - 760 μm, vorzugsweise von 254 μm - 380 μm, wobei die Partikelgröße mit grob 44 μm bis 177 μm und vorzugsweise grob 74 μm - 177 μm angegeben ist. Die Porosität ist mit 10 - 50 % angegeben.

EP 0 581 185 A1 zeigt ebenfalls einen Gleitlagerverbundwerkstoff der eingangs genannten Art mit einer Schichtdicke der porösen Trägerschicht von 100 - 350 μm, besondere 250 μm. Das Pulver zur Bildung der porösen Trägerschicht kann durch ein Sieb mit Maschenweite 177 μm hindurchtreten, es wird jedoch von einem Sieb mit 44 μm Maschenweite zurückgehalten Die Porosität beträgt nicht weniger als 25 %, vorzugsweise 28-35 %.

GB 2 356 226 A zeigt ebenfalls einen gattungsgemäßen Gleitlagerverbundwerkstoff. Eine durchschnittliche Partikelgröße der poröse Trägerschicht bildenden Partikel ist mit 25-100 μm angegeben. Ziel dieser Druckschrift ist es, die elastische Deformation unter Last und den Gleitwiderstand zu reduzieren. Ausführungen zu einer Partikelgrößenverteilung sind nicht zu entnehmen.

JP 2013-083304 A scheint ebenfalls einen Gleitlagerverbundwerkstoff der eingangs genannten Art zu beschreiben. Es sind zwei Siebgrößen mit einer Maschenweite von 177 μm bzw. 100 μm genannt. Eine nachvollziehbare Partikelgrößenverteilung ist nicht genannt.

EP 2 400 175 A1 zeigt ebenfalls einen gattungsgemäßen Gleitlagerverbundwerkstoff mit einer metallischen Stützschicht, mit einer porösen Trägerschicht, und mit einem Gleitschichtmaterial auf Polymerbasis, gegebenenfalls mit die tribologischen Eigenschaften beeinflussenden Füllstoffen, welches in die poröse Trägerschicht einimprägniert ist und einen Überstand über die poröse Trägerschicht bildet, wobei die Trägerschicht eine Sinterschicht ist, die aus miteinander und mit der Stützschicht versinterten Partikeln gebildet ist, wobei die Partikel rund sind, wobei die versinterten Partikel eine Partikelgröße zwischen 45 und 125 $\mu$m aufweisen und eine Partikelgröße von mehr als 125 $\mu$m aufweist, und wobei die Porosität der Trägerschicht wenigstens 35 % und höchstens 55 % beträgt. Als Dicke dieser porösen Trägerschicht ist 0,10-0,5 mm genannt. Auch in dieser Druckschrift ist keine Partikelgrößen Verteilung beschrieben.

Der vorliegenden Erfindung liegt die Aufgabe zugrunde, einen Gleitlagerverbundwerkstoff zu schaffen, der auf wirtschaftliche Weise herstellbar ist, aber gleichwohl eine hohe Betriebssicherheit des hieraus hergestellten Gleitlagerelements aufweist.

Diese Aufgabe wird durch einen Gleitlagerverbundwerkstoff mit den Merkmalen des Anspruchs 1 gelöst. Unter runden oder knolligen Partikeln werden Partikel mit einer Kugelgestalt oder jedenfalls einer verrundeten von der idealen Kugelgestalt abweichenden Form verstanden, die jedenfalls keine irreguläre oder spratzige, also scharfe Kanten oder Hinterschnitte umfassende Gestalt aufweist. Knollige Partikel haben dabei ein Verhältnis einer größten Abmessung zu einer kleinsten Abmessung von höchstens 2,0. Hierdurch lassen sich auch verhältnisgemäß kleine Schichtdicken im beanspruchten Bereich bei der Herstellung der porösen Trägerschicht ausgehend von einem auf die Stützschicht aufzubringenden und abzurakelnden Pulver mit guter Qualität und gleichmäßiger Oberflächenbeschaffenheit der Trägerschicht ohne Rillen oder Riefen erzielen.

Mit der vorliegenden Erfindung wurde festgestellt, dass es sich bei der Partikelgröße des für die Ausbildung der dreidimensional porösen Trägerschicht verwandten Metallpulvers in zweifacher Hinsicht um eine kritische Größe handelt. Zum einen stellt dieses Pulver einen Kostenfaktor des Gleitlagerverbundwerkstoffs insgesamt dar, der jeweils wenigstens das Doppelte der übrigen Komponenten, also des Stützschichtmetalls und des Gleitschichtmaterials, ausmacht. Zum anderen beeinflusst die Partikelgröße des die metallische Sinterschicht bildenden Pulvers die Haltefähigkeit für das Gleitschichtmaterial. Es wurde festgestellt, dass bei sehr kleinen Partikelgrößen wie gemäß EP 2 787 227 B1 vorgeschlagen die Verklammerung des Gleitschichtmaterials nicht optimal ist, obschon auch hier ein dreidimensional wirkender Hintergriff theoretisch ausgebildet werden kann. Der Lehrsatz "dünne Schichten tragen besser" gilt hier aber nicht ohne weiteres, da es sich als schwierig erweist, das Gleitschichtmaterial in die dreidimensional poröse Trägerschicht einzuimprägnieren. Mit der vorliegenden Erfindung wird vorgeschlagen, im Bestreben der Reduzierung der Schichtdicken bei hier in Rede stehenden Gleitlagerverbundwerkstoffen aus wirtschaftlichen Gründen, aber auch aus Gründen des zur Verfügung stehenden Bauraums, dennoch moderate Partikelgrößen im hier beanspruchten Bereich zur Bildung der gesinterten Trägerschicht zu verwenden und gleichzeitig die Dicke der Trägerschicht im beanspruchten Bereich einzustellen. Durch diese Kombination von Merkmalen kann ein Gleitlagerverbundwerkstoff aufgrund der verhältnismäßig geringen Dicke und des verhältnismäßig geringen Materialaufwands der gesinterten Trägerschicht erhalten werden, der aber dennoch eine sichere Gebrauchstauglichkeit aufweist, also aufgrund hinreichender Dicke der Stützschicht sicher in einer Gehäuseöffnung einpressbar ist und eine sichere Verankerung des Gleitschichtmaterials in der porösen Trägerschicht gewährleistet.

Erfindungsgemäß wird zur Ausbildung der porösen Trägerschicht ein sinterbares Metallpulver eingesetzt, bei dem ein verhältnismäßig geringer Anteil der Partikel die genannte Partikelgröße von 125 $\mu$m überschreitet bzw. die Partikelgröße von 45 $\mu$m unterschreitet. Auf diese Weise kann erreicht werden, dass ein für die Zwecke der Verklammerung gleichmäßiges und offenporiges Aufnahmevolumen für das Gleitschichtmaterial bereitgestellt wird, so dass es gelingt, das Gleitschichtmaterial gleichmäßig und porenfüllend in die poröse Trägerschicht einzuimprägnieren, was typischerweise durch einen Walzvorgang mit moderatem Walzdruck geschieht, so dass das Gerüst der dreidimensional porösen Trägerschicht hiervon unbeeinträchtigt bleibt. Insbesondere erweist es sich als vorteilhaft, wenn wenigstens 75 Masse-%, insbesondere wenigstens 80 Masse-%, insbesondere wenigstens 85 Masse-%, insbesondere wenigstens 90 Masse-% der Partikel eine Partikelgröße zwischen 63 und 125 $\mu$m aufweisen.

Weiter erweist es sich als vorteilhaft, dass die Schichtdicke der porösen Trägerschicht wenigstens 120 $\mu$m, insbesondere wenigstens 130 $\mu$m und insbesondere höchstens 190 $\mu$m und weiter insbesondere höchstens 180 $\mu$m beträgt.

Bei der Herstellung des erfindungsgemäßen Gleitlagerverbundwerkstoffs kann die Partikelgröße entsprechend DIN ISO 4497 bestimmt werden oder überprüft werden. Die Bestimmung der Partikelgrößen entsprechend dieser Norm erfolgt, indem ein zu prüfendes Pulver durch eine Reihe von kalibrierten Prüfsieben mit Metalldrahtsiebböden mit definierter Maschenweite gesiebt wird. Vorzugsweise geschieht die Siebung unter Verwendung einer mechanischen Sieb- oder Rüttelvorrichtung, wobei das jeweilige Absieben in einer jeweiligen Siebstufe gemäß DIN ISO 4497 so lange ausgeführt wird, bis ein Endzustand erreicht ist, bei dem sich die Menge, die durch dasjenige Sieb hindurchfällt, welches den größten Anteil der Pulver-oder Probemenge zurückhält, in einer Minute kleiner als 0,1 % dieser Probemenge ist.

Nach dem Absieben werden die Fraktionen, also die in einem jeweiligen Sieb zurückgehaltenen Pulvermengen, gewogen und das Ergebnis der zurückgehaltenen Menge für jedes Prüfsieb angegeben. Es kann auch der sogenannte kumulierte Siebrückstand für jedes Sieb angegeben werden, wobei dies ausgehend von dem Sieb mit der größten Maschenweite in Richtung abnehmender Maschenweite geschieht. Bei Verwendung insbesondere der folgenden Prüfsiebe mit folgenden Maschenweiten kann der beanspruchte Parameterbereich ohne weiteres abgeleitet werden:

Boden (0 pm)/32 pm/45 pm/63 pm/80 $\mu$m/90 pm/125 pm/160 pm/180 pm/200 $\mu$m.

Insbesondere könnte eine Überprüfung lediglich durch Verwendung zweier Siebe, nämlich mit einer Maschenweite von 45 bzw. 125 $\mu$m, ausreichen, um die beanspruchte Partikelgröße sicherzustellen oder zu überprüfen.

Wenn die Korngrößenverteilung durch Siebrückstandsuntersuchungen ausgeführt wird und das Ergebnis als kumulierter Siebrückstand für eine betreffende Charge bestimmt wird, so kann der kumulierte Siebrückstand R durch eine Verteilungsfunktion angegeben werden, nämlich

$$R = e^{-\left(\frac{t}{\eta}\right)^{\beta}}$$

R = kumulierter Siebrückstand
t = Maschenweite
$\eta$ = charakteristische Korngröße
$\beta$ = Formparameter (=Steigung der Geraden bei logarithmischer Auftragung nach DIN 66 145).

Unter Rückgriff auf diese Verteilungsfunktion lässt sich die Partikelgrößenverteilung der die poröse Trägerschicht bildenden Partikel noch weitergehend charakterisieren. Nach einer bevorzugten Ausführungsform der Erfindung sind die die poröse Trägerschicht bildenden Partikel weiter dadurch gekennzeichnet, dass deren charakteristische Korngröße $\eta$ zwischen 75 und 100 $\mu$m, insbesondere zwischen 75 und 95 $\mu$m, insbesondere zwischen 75 und 90 $\mu$m liegt, und dass der Formparameter $\beta$ wenigstens 5,0, insbesondere wenigstens 5,2, insbesondere wenigstens 5,5 beträgt. Sofern ein Gleitlagerverbundwerkstoff in fertiger Form gegeben ist, lässt sich eine Partikelgrößenanalyse durch Siebung natürlich nicht mehr ausführen. Es ist jedoch ohne weiteres möglich, dass bei dem Gleitlagerverbundwerkstoff das Gleitschichtmaterial auf Polymerbasis weggebrannt wird, indem das Gleitschichtmaterial erhitzt wird derart, dass das dreidimensional poröse Gerüst der gesinterten Trägerschicht hierdurch nicht beeinträchtigt wird. Es ist dann möglich, das verbleibende Sintergerüst mit dem Mikroskop, insbesondere von oben, d.h. orthogonal zur Ebene des Gleitlagerverbundwerkstoffs, zu betrachten. Hierbei kann ohne weiteres die Partikelgröße, d.h. die jeweilige größte Abmessung der die Trägerschicht bildenden miteinander versinterten Partikel bestimmt werden. Hierfür stehen insbesondere geeignete Computerprogramme zur Bildauswertung zur Verfügung. Sollte dies im Einzelfall nicht gewünscht oder nicht möglich sein, so besteht die Möglichkeit, aus Schliffbildern unter Verwendung von Bilderfassungs- und Auswerteprogrammen Aussagen über die Partikelgrößenverteilung zu gewinnen.

Es wurde festgestellt, dass eine bestimmte Porosität der Trägerschicht für die Erzielung einer hinreichenden Verklammerung des Gleitschichtmaterials allein nicht hinreichend ist. Als kritischer Parameter ist vielmehr eine gleichmäßige und hinreichende Partikelgröße der gesinterten Pulverpartikel erforderlich, wie vorausgehend ausgeführt wurde. Es kann aber als vorteilhaft angesehen werden, dass die Porosität der Trägerschicht wenigstens 35 % und höchstens 55 % beträgt. Die Porosität wird dabei anhand eines Schliffbilds eines Schnitts orthogonal zur Ebene des Gleitlagerverbundwerkstoff wie folgt bestimmt: nach üblicher Präparation eines Schnitts wird ein optisches lichtmikroskopisches Bild einer Rechteckfläche des Schnitts betrachtet. Die kleinere Abmessung der Rechteckfläche entspricht der Dicke der Trägerschicht, und die größere Abmessung der Rechteckfläche beträgt 1,5 mm und erstreckt sich demgemäß in Ebenenrichtung des Gleitlagerverbundwerkstoffs. Es wird dann unter Verwendung von Bildauswerteverfahren diejenige Fläche des Rechtecks ermittelt, die keine Schnittfläche mit den Partikeln bildet. Der Anteil dieser Fläche an der Gesamtrechteckfläche wird vorliegend als Porosität betrachtet und bezeichnet.

In Abhängigkeit von der Tragfähigkeit des Gleitschichtmaterials auf Polymerbasis unterscheidet man Gleitlagerverbundwerkstoffe, bei denen der Überstand des Gleitschichtmaterials über die poröse Trägerschicht nur eine verhältnismäßig dünne Einlaufschicht bildet und solche, bei denen der Überstand eine für den längerfristigen Betrieb dienende Laufschicht bildet.

Insbesondere wenn die Polymerbasis des Gleitschichtmaterials von PTFE und in manchen Fällen von PVDF gebildet ist, erweist es sich als vorteilhaft, dass der Überstand des Gleitschichtmaterials über die poröse Trägerschicht eine Einlaufschicht bildet und 5 - 70 $\mu$m, insbesondere 5 - 50 $\mu$m und weiter insbesondere 5 - 30 $\mu$m beträgt. Weiter erweist es sich als vorteilhaft, wenn die Dicke der porösen Trägerschicht 130 - 180 $\mu$m beträgt und die Dicke des Überstands des Gleitschichtmaterials über die poröse Trägerschicht 5 - 20 $\mu$m beträgt.

Insbesondere wenn die Polymerbasis des Gleitschichtmaterials von PEEK, PVDF, PA, PPA, PPS oder POM gebildet ist, erweist es sich als vorteilhaft, dass der Überstand des Gleitschichtmaterials über die poröse Trägerschicht eine für den dauerhaften Betrieb gedachte Laufschicht bildet und wenigstens 50 $\mu$m, insbesondere wenigstens 70 $\mu$m und höchstens 350 $\mu$m, insbesondere höchstens 300 $\mu$m und weiter insbesondere höchstens 250 $\mu$m beträgt. Weiter erweist es sich als vorteilhaft, wenn die Dicke der porösen Trägerschicht 130 - 180 $\mu$m beträgt, und dass die Dicke des Überstands des Gleitschichtmaterials über die poröse Trägerschicht 80 - 150 $\mu$m, insbesondere 80 - 130 $\mu$m, insbesondere 80-120 $\mu$m, insbesondere 90 - 110 $\mu$m beträgt.

Weiter wird vorgeschlagen, dass die Dicke des Gleitlagerverbundwerkstoffs 0,4 - 5 mm, insbesondere 0,4 - 3,5 mm beträgt.

Vorzugsweise entfällt der größte Teil der Dicke des Gleitlagerverbundwerkstoffs auf die Stützschicht. Es werden zur Variierung der Dicke des Gleitlagerverbundwerkstoffs vorzugsweise Stützschichten mit unterschiedlicher Dicke vorzugsweise von 0,3 - 0,4 mm bzw. von 0,7 - 0,8 mm bzw. von 0,8 - 0,9 mm bzw. von 1,2 - 1,3 mm bzw. von 1,3 - 1,4 mm vorgehalten und verwendet. Dabei kann es sich als vorteilhaft erweisen, wenn auf diese verschiedenen Stützschichten jeweils dieselbe Trägerschichtdicke und derselbe Überstand des Gleitschichtmaterials vorgesehen wird.

Als Polymerbasis des Gleitschichtmaterials kommt in vorteilhafter Weise PTFE, PEEK, PVDF, PA, PPA, PPS und POM in Frage. PTFE ist ein bevorzugtes Basispolymer. Wenn in diesem Zusammenhang von dem Begriff der Polymerbasis die Rede ist, so bedeutet dies nicht, dass nicht weitere Polymere oder eine Polymermischung vorhanden sein darf, sondern es bedeutet, dass bezogen auf die Polymerbasis der überwiegende Anteil von wenigstens 50 Vol.-%, vorzugsweise von wenigstens 80 % und vorzugsweise von wenigstens 90 % von dem betreffenden Basispolymer gebildet ist.

Als Füllstoffe für das Gleitschichtmaterial kommen insbesondere eher schmierende Füllstoffe, wie Metallsulfide (zB. ZnS, WS$_2$, MoS$_2$), Calciumphosphate, Bariumsulfat (BaSO$_4$), Graphit, hexagonales Bornitrid (BN), Calciumfluorid, und/oder verstärkende Füllstoffe, wie Kohlenstofffasern (CF), Aramidfasern, Wollastonit, Titandioxid (TiO$_2$), in Frage. Aber auch geringe Mengen anderer Polymere als das Basispolymer können als tribologisch wirksame Füllstoffe dienen.

Bei einer bevorzugten Ausbildung ist das Basispolymer von PTFE gebildet, es sind ZnS, Kohlenstofffasern (CF) und PFA als Füllstoffe enthalten, und zwar vorzugsweise in folgenden Mengen

| PTFE | 66 Masse-%, | oder als Rest |
|------|------|------|
| ZnS | 27,5 Masse-%, | oder 25 - 30 Masse-% |
| CF | 2 Masse-%, | oder 1,5 - 2,5 Masse-% |
| PFA | 4,5 Masse-%, | oder 4 - 5 Masse-%. |

Bei einer anderen bevorzugten Ausbildung ist wiederum das Basispolymer von PTFE gebildet, und es ist Bariumsulfat als Füllstoff enthalten, und zwar vorzugsweise in folgenden Mengen

| PTFE | 82 Masse-%, | oder 80 - 85 Masse-% |
|------|------|------|
| BaSO$_4$ | 18 Masse-%, | oder 15 - 20 Masse-%. |

Bei einer bevorzugten Ausbildung ist das Basispolymer von PVDF gebildet, es sind BaSO$_4$, Kohlenstofffasern (CF) und PTFE als Füllstoffe enthalten, und zwar vorzugsweise in folgenden Mengen

| PVDF | Rest |
|------|------|
| BaSO$_4$ | 20 - 23 Masse-% |
| CF | 2 - 3 Masse-% |
| PTFE | 9 - 12 Masse-%. |

Die vorliegende Erfindung betrifft auch ein Verfahren zum Herstellen eines Gleitlagerverbundwerkstoffs der erfindungsgemäßen Art mit den Merkmalen der Ansprüche 11 bzw. 12. Weiter betrifft die Erfindung ein Gleitlagerelement, welches aus einem Gleitlagerverbundwerkstoff nach einem oder mehreren der Ansprüche 1-10 hergestellt ist. Insbesondere ist das Gleitlagerelement aus einem Flachmaterialabschnitt des Gleitlagerverbundwerkstoffs in einem Biege-Rollvorgang hergestellt, so dass es insbesondere die Form einer gerollten Buchse oder Bundbuchse oder die Form einer Schale aufweist. Insbesondere besteht das Gleitlagerelement aus dem Gleitlagerverbundwerkstoff.

Weitere Merkmale, Einzelheiten und Vorteile der Erfindung ergeben sich aus den beigefügten Patentansprüchen und der zeichnerischen Darstellung und nachfolgenden Beschreibung einer bevorzugten Ausführungsform der Erfindung.

In der Zeichnung zeigt:

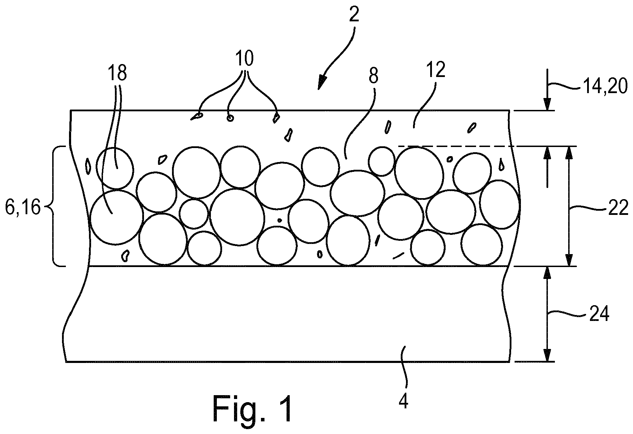

Figur 1     eine schematische Schnittansicht eines erfindungsgemäßen Gleitlagerverbundwerkstoffs.

Figur 1 zeigt in stark schematischer Darstellung (nicht maßstabsgerecht) einen insgesamt mit dem Bezugszeichen 2 bezeichneten Gleitlagerverbundwerkstoff mit einer metallischen Stützschicht 4, vorzugsweise aus Stahl, und mit einer porösen Trägerschicht 6, vorzugsweise aus Bronze und mit einem Gleitschichtmaterial 8 auf Polymerbasis, welches vorzugsweise die tribologischen Eigenschaften beeinflussende Füllstoffe 10 umfasst, die aber nur hier und da angedeutet sind. Das Gleitschichtmaterial 8 ist in die poröse Trägerschicht 6 einimprägniert und bildet einen eine Einlaufschicht 12 oder eine dauerhafte Laufschicht 12 bildenden Überstand 14 über die poröse Trägerschicht 6. Die poröse Trägerschicht 6 ist eine Sinterschicht 16 aus miteinander und mit der Stützschicht 4 versinterten Partikeln 18. Die Partikel 18 sind überwiegend rund oder leicht knollig und jedenfalls nicht irregulär länglich oder spratzig. Sie sind aus einem Bronzepulver einer definierten Partikelgröße gebildet. Das Bronzepulver ist derart gewählt, dass es eine durch Siebung verifizierte Partikelgrößenverteilung aufweist, wonach höchstens 4 Masse-% der Partikel eine Partikelgröße von mehr als 125 $\mu$m und höchstens 8 Masse-% eine Partikelgröße unterhalb von 45 $\mu$m auf-

weist. Die überwiegende Anzahl der Pulverpartikel 18 weist daher eine Partikelgröße zwischen 45 und 125 μm auf. Auf diese Weise wird ein offenes Porenvolumen zwischen den miteinander versinterten Partikeln 18 erhalten, welches es gestattet, dass das Gleitschichtmaterial 8 auf Polymerbasis in prozessüblicher Weise in die Poren der dreidimensional porösen Trägerschicht 6 einimprägniert werden kann und im Betrieb des erfindungsgemäßen Gleitlagerverbundwerkstoffs bzw. eines hieraus hergestellten Gleitlagerelements betriebssicher in bzw. an der Trägerschicht 6 gehalten und verklammert ist. Das Gleitschichtmaterial 8 bildet dabei den Überstand 14 über der Trägerschicht 6 einer Dicke 20. Die Trägerschicht 6 weist eine Schichtdicke 22 von wenigstens 110 μm und höchstens 180 μm auf. Die Dicke 24 der metallischen Stützschicht 4 beträgt wenigstens 0,3 mm bis höchstens 4,0 mm. Die Schichtdicken können unproblematisch anhand eines Schliffbilds des Gleitlagerverbundwerkstoffs entsprechend der Figur ermittelt werden. Die Partikelgrößen der miteinander versinterten Partikel der Trägerschicht lassen sich ebenfalls anhand eines Schliffbilds entnehmen, oder das Gleitschichtmaterial wird ausgebrannt, so dass das Sintergerüst der Trägerschicht im Mikroskop betrachtet werden kann.

Bei einer bevorzugten Ausführungsform des Gleitlagerverbundwerkstoffs ist die Polymerbasis des Gleitschichtmaterials 8 PTFE, oder sie ist alternativ von einem tragenden Polymer wie PEEK, PVDF, PA, PPA, PPS oder POM gebildet.

## Patentansprüche

1. Gleitlagerverbundwerkstoff (2) mit einer metallischen Stützschicht (4), insbesondere aus Stahl oder aus einer Kupferlegierung, mit einer porösen Trägerschicht (6), insbesondere aus Bronze, vorzugsweise aus bleifreier Bronze, und mit einem Gleitschichtmaterial (8) auf Polymerbasis, gegebenenfalls mit die tribologischen Eigenschaften beeinflussenden Füllstoffen (10), welches in die poröse Trägerschicht (6) einimprägniert ist und einen Überstand (14) über die poröse Trägerschicht (6) bildet, wobei die Trägerschicht (6) eine Sinterschicht (16) ist, die aus miteinander und mit der Stützschicht (4) versinterten Partikeln (18) gebildet ist, wobei die Partikel (18) rund oder knollig sind, wobei eine Schichtdicke (22) der porösen Trägerschicht (6) 130 - 200 μm beträgt und wobei wenigstens 90 Masse-% der versinterten Partikel (18) eine Partikelgröße zwischen 45 und 125 μm aufweisen und wobei höchstens 4 Masse-% der versinterten Partikel (18) eine Partikelgröße von mehr als 125 μm und höchstens 8 Masse-% eine Partikelgröße unterhalb von 45 μm aufweist, und wobei die Partikelgröße der die Trägerschicht (6) bildenden versinterten Partikel (18) einer Partikelgrößenverteilung nach der Beziehung $R = e^{-\left(\frac{t}{\eta}\right)^{\beta}}$ folgt, wobei R ein kumulierter Siebrückstand bei einer Siebrückstandsuntersuchung und t eine jeweilige Maschenweite bei der Siebrückstandsuntersuchung ist, und dass die charakteristische Korngröße η zwischen 75 und 100 μm liegt, und wobei der Formparameter β wenigstens 5,0 beträgt, und wobei die Porosität der Trägerschicht (6) wenigstens 35 % und höchstens 55 % beträgt.

2. Gleitlagerverbundwerkstoff nach Anspruch 1, **dadurch gekennzeichnet, dass** wenigstens 94 Masse-% der versinterten Partikel (18) eine Partikelgröße zwischen 45 und 125 μm aufweisen.

3. Gleitlagerverbundwerkstoff nach Anspruch 1, **dadurch gekennzeichnet, dass** wenigstens 75 Masse-%, insbesondere wenigstens 80 Masse-%, insbesondere wenigstens 85 Masse-%, insbesondere wenigstens 90 Masse-% der Partikel (18) eine Partikelgröße zwischen 63 und 125 μm aufweisen.

4. Gleitlagerverbundwerkstoff nach einem oder mehreren der vorstehenden Ansprüche, **dadurch gekennzeichnet, dass** die charakteristische Korngröße η zwischen 75 und 95 μm, insbesondere zwischen 75 und 90 μm liegt, und dass der Formparameter β wenigstens 4,5, insbesondere wenigstens 5,0, insbesondere wenigstens 5,2, insbesondere wenigstens 5,5 beträgt.

5. Gleitlagerverbundwerkstoff nach einem oder mehreren der vorstehenden Ansprüche, **dadurch gekennzeichnet, dass** die Schichtdicke (22) der porösen Trägerschicht (6) höchstens 190 μm und weiter insbesondere höchstens 180 μm beträgt.

6. Gleitlagerverbundwerkstoff nach einem oder mehreren der vorstehenden Ansprüche, **dadurch gekennzeichnet, dass** der Überstand (14) des Gleitschichtmaterials (8) über die poröse Trägerschicht (6) eine Einlaufschicht bildet und 5 - 70 μm, insbesondere 5 - 50 μm und weiter insbesondere 5 - 30 μm beträgt.

7. Gleitlagerverbundwerkstoff nach Anspruch 6, **dadurch gekennzeichnet, dass** die Dicke (22) der porösen Trägerschicht (6) 130 - 180 μm beträgt, und dass die Dicke des Überstands (14) des Gleitschichtmaterials (8) über die poröse Trägerschicht 5 - 20 μm beträgt.

8. Gleitlagerverbundwerkstoff nach einem oder mehreren der vorstehenden Ansprüche, **dadurch gekennzeichnet, dass** der Überstand (14) des Gleitschichtmaterials (8) über die poröse Trägerschicht (6) eine Laufschicht bildet und wenigstens 50 $\mu$m, insbesondere wenigstens 70 $\mu$m und höchstens 350 $\mu$m, insbesondere höchstens 300 $\mu$m und weiter insbesondere höchstens 250 $\mu$m beträgt.

9. Gleitlagerverbundwerkstoff nach Anspruch 8, **dadurch gekennzeichnet, dass** die Dicke (22) der porösen Trägerschicht (6) 130 - 180 $\mu$m beträgt, und dass die Dicke (20) des Überstands (14) des Gleitschichtmaterials (8) über die poröse Trägerschicht (6) 80 - 150 $\mu$m, insbesondere 80 - 130 $\mu$m, insbesondere 80-120 $\mu$m, insbesondere 90 - 110 $\mu$m beträgt.

10. Gleitlagerverbundwerkstoff nach einem oder mehreren der vorstehenden Ansprüche, **dadurch gekennzeichnet, dass** die Polymerbasis PTFE, PEEK, PVDF, PA, PPA, PPS oder POM ist.

11. Verfahren zum Herstellen eines Gleitlagerverbundwerkstoffs (2) nach einem oder mehreren der vorstehenden Ansprüche, mit einer metallischen Stützschicht (4), insbesondere aus Stahl, mit einer porösen Trägerschicht (6), insbesondere aus Bronze, und mit einem Gleitschichtmaterial (8) auf Polymerbasis, gegebenenfalls mit die tribologischen Eigenschaften beeinflussenden Füllstoffen (10), welches in die poröse Trägerschicht (6) einimprägniert ist und einen Überstand (14) über die poröse Trägerschicht (6) bildet, wobei die Trägerschicht (6) eine Sinterschicht (16) ist, die aus miteinander und mit der Stützschicht (4) versinterten Partikeln (18) gebildet ist, **dadurch gekennzeichnet, dass** zur Bildung der porösen Trägerschicht (6) Partikel (18) eines Pulvers verwendet werden, von dem wenigstens 90 Masse-% eine Partikelgröße zwischen 45 und 125 $\mu$m und höchstens 4 Masse-% eine Partikelgröße von mehr als 125 $\mu$m und höchstens 8 Masse-% eine Partikelgröße unterhalb von 45 $\mu$m aufweisen, und
wobei die Partikelgröße der die Trägerschicht (6) bildenden versinterten Partikel (18) einer Partikelgrößenverteilung nach der Beziehung $R = e^{-\left(\frac{t}{\eta}\right)^{\beta}}$ folgt, wobei R ein kumulierter Siebrückstand bei einer Siebrückstandsuntersuchung und t eine jeweilige Maschenweite bei der Siebrückstandsuntersuchung ist, und dass die charakteristische Korngröße $\eta$ zwischen 75 und 100 $\mu$m liegt, und wobei der Formparameter $\beta$ wenigstens 5,0 beträgt, und wobei die Porosität der Trägerschicht (6) wenigstens 35 % und höchstens 55 % beträgt, und dass das Pulver zur Bildung der porösen Trägerschicht (6) in einer dünnen Schicht auf die metallische Stützschicht (4) aufgestreut und daran anschließend aufgesintert wird, so dass die poröse Trägerschicht (6) mit einer Dicke (22) von 130 - 200 $\mu$m gebildet wird, und dass das Gleitschichtmaterial (8) auf Polymerbasis in die poröse Trägerschicht (6) einimprägniert wird, wobei zudem der Überstand (14) über die poröse Trägerschicht (6) gebildet wird.

12. Verfahren nach Anspruch 11, **dadurch gekennzeichnet, dass** zur Bildung der porösen Trägerschicht (6) Partikel (18) eines Pulvers verwendet werden, von dem wenigstens 75 Masse-%, vorzugsweise wenigstens 80 Masse-% eine Partikelgröße zwischen 63 und 125 $\mu$m aufweisen.

13. Gleitlagerelement, hergestellt aus einem Gleitlagerverbundwerkstoff nach einem oder mehreren der Ansprüche 1-10.

## Claims

1. Sliding bearing composite material (2) with a metallic support layer (4), in particular of steel or of a copper alloy, with a porous backing layer (6), in particular of bronze, preferably of lead-free bronze, and with a polymer-based sliding layer material (8), optionally with fillers (10) influencing the tribological properties, which is impregnated in the porous backing layer (6) and forms a projection (14) above the porous backing layer (6), wherein the backing layer (6) is a sinter layer (16) which is formed of particles (18) which are sintered together and with the support layer (4), wherein the particles (18) are round or bulbous, wherein a layer thickness (22) of the porous backing layer (6) is 130 - 200 $\mu$m and wherein at least 90 mass% of the sintered particles (18) have a particle size of between 45 and 125 $\mu$m and wherein at most 4 mass% of the sintered particles (18) have a particle size of more than 125 $\mu$m and at most 8 mass% have a particle size below 45 $\mu$m, and wherein the particle size of the sintered particles (18) forming the backing layer (6) follows a particle size distribution according to the relationship $R = e^{-\left(\frac{t}{\eta}\right)^{\beta}}$, where R is a cumulative sieve residue from a sieve residue examination and t is a respective mesh width used in the sieve residue examination, and that the characteristic particle size $\eta$ lies between 75 and 100 $\mu$m, and wherein the form parameter $\beta$ is at least 5.0, and wherein the porosity of the backing layer (6) is at least 35 % and at most 55 %.

2. Sliding bearing composite material according to claim 1, **characterised in that** at least 94 mass% of the sintered particles (18) have a particle size of between 45 and 125 $\mu$m.

3. Sliding bearing composite material according to claim 1, **characterised in that** at least 75 mass%, in particular at least 80 mass%, in particular at least 85 mass%, in particular at least 90 mass% of the particles (18) have a particle size of between 63 and 125 $\mu$m.

4. Sliding bearing composite material according to one or more of the preceding claims, **characterised in that** the characteristic particle size $\eta$ lies between 75 and 95 $\mu$m, in particular between 75 and 90 $\mu$m, and that the form parameter $\beta$ is at least 4.5, in particular at least 5.0, in particular at least 5.2, in particular at least 5.5.

5. Sliding bearing composite material according to one or more of the preceding claims, **characterised in that** the layer thickness (22) of the porous backing layer (6) is at most 190 $\mu$m and more particularly at most 180 $\mu$m.

6. Sliding bearing composite material according to one or more of the preceding claims, **characterised in that** the projection (14) of the sliding layer material (8) above the porous backing layer (6) forms a running-in layer and amounts to 5 - 70 $\mu$m, in particular 5 - 50 $\mu$m and more particularly 5 - 30 $\mu$m.

7. Sliding bearing composite material according to claim 6, **characterised in that** the thickness (22) of the porous backing layer (6) is 130 - 180 $\mu$m, and that the thickness of the projection (14) of the sliding layer material (8) above the porous backing layer is 5 - 20 $\mu$m.

8. Sliding bearing composite material according to one or more of the preceding claims, **characterised in that** the projection (14) of the sliding layer material (8) above the porous backing layer (6) forms a running layer and amounts to at least 50 $\mu$m, in particular at least 70 $\mu$m and at most 350 $\mu$m, in particular at most 300 $\mu$m and more particularly at most 250 $\mu$m.

9. Sliding bearing composite material according to claim 8, **characterised in that** the thickness (22) of the porous backing layer (6) amounts to 130 - 180 $\mu$m, and that the thickness (20) of the projection (14) of the sliding layer material (8) above the porous backing layer (6) amounts to 80 - 150 $\mu$m, in particular 80 - 130 $\mu$m, in particular 80-120 $\mu$m, in particular 90 - 110 $\mu$m.

10. Sliding bearing composite material according to one or more of the preceding claims, **characterised in that** the polymer base is PTFE, PEEK, PVDF, PA, PPA, PPS or POM.

11. Method for producing a sliding bearing composite material (2) according to one or more of the preceding claims, with a metallic support layer (4), in particular of steel, with a porous backing layer (6), in particular of bronze, and with a polymer-based sliding layer material (8), optionally with fillers (10) influencing the tribological properties, which is impregnated in the porous backing layer (6) and forms a projection (14) above the porous backing layer (6), wherein the backing layer (6) is a sinter layer (16) which is formed of particles (18) which are sintered together and with the support layer (4), **characterised in that** particles (18) of a powder are used in order to form the porous backing layer (6), of which at least 90 mass% have a particle size of between 45 and 125 $\mu$m and at most 4 mass% have a particle size of more than 125 $\mu$m and at most 8 mass% have a particle size below 45 $\mu$m, and wherein the particle size of the sintered particles (18) forming the backing layer (6) follows a particle size distribution according to the relationship $R = e^{-\left(\frac{t}{\eta}\right)^{\beta}}$, where R is a cumulative sieve residue from a sieve residue examination and t is a respective mesh width used in the sieve residue examination, and that the characteristic particle size $\eta$ lies between 75 and 100 $\mu$m, and wherein the form parameter $\beta$ is at least 5.0, and wherein the porosity of the backing layer (6) is at least 35 % and at most 55 %, and that in order to form the porous backing layer (6) the powder is scattered in a thin layer on the metallic support layer (4) and then sintered onto same, so that the porous backing layer (6) is formed with a thickness (22) of 130 - 200 $\mu$m, and that the polymer-based sliding layer material (8) is impregnated in the porous backing layer (6), wherein in addition the projection (14) is formed above the porous backing layer (6).

12. Method according to claim 11, **characterised in that** particles (18) of a powder are used in order to form the porous backing layer (6) of which at least 75 mass%, preferably at least 80 mass% have a particle size between 63 and 125 $\mu$m.

13. Sliding bearing element manufactured from a sliding bearing composite material according to one or more of the claims 1-10.

**Revendications**

1. Matériau composite pour palier lisse (2) comprenant une couche d'appui métallique (4), composée en particulier d'acier ou d'un alliage de cuivre, une couche de support poreuse (6), composée en particulier de bronze, de préférence de bronze exempt de plomb, et un matériau de couche lisse (8) à base de polymère, contenant éventuellement des charges (10) agissant sur les caractéristiques tribologiques, dont est imprégnée la couche de support poreuse (6) et qui forme une saillie (14) au-dessus de la couche de support poreuse (6), dans lequel la couche de support (6) est une couche frittée (16) composée de particules (18) frittées les unes avec les autres ou avec la couche d'appui (4), dans lequel les particules (18) sont rondes ou volumineuses, dans lequel une épaisseur de couche (22) de la couche de support poreuse (6) est de 130 à 200 μm et dans lequel au moins 90 % en masse des particules frittées (18) présentent une taille de particule comprise entre 45 et 125 μm et dans lequel au plus 4 % en masse des particules frittées (18) présentent une taille de particule supérieure à 125 μm et au plus 8 % en masse présentent une taille de particule inférieure à 45 μm, et dans lequel la taille de particule des particules frittées (18) formant la couche de support (6) suit une distribution de taille de particule selon l'équation

$$R = e^{-\left(\frac{t}{\eta}\right)^{\beta}}$$

lon l'équation dans laquelle R est un résidu de tamisage cumulatif dans une investigation de résidu de tamisage et t est une taille de maille respective dans l'investigation de résidu de tamisage, et en ce que la taille de grain caractéristique η est comprise entre 75 et 100 μm, et dans laquelle le paramètre de forme β est d'au moins 5,0, et dans lequel la porosité de la couche de support (6) est d'au moins 35 % et d'au plus 55 %.

2. Matériau composite pour palier lisse selon la revendication 1, **caractérisé en ce qu'**au moins 94 % en masse des particules frittées (18) présentent une taille de particule comprise entre 45 et 125 μm.

3. Matériau composite pour palier lisse selon la revendication 1, **caractérisé en ce qu'**au moins 75 % en masse, en particulier au moins 80 % en masse, en particulier au moins 85 % en masse, en particulier au moins 90 % en masse, des particules (18) présentent une taille de particule comprise entre 63 et 125 μm.

4. Matériau composite pour palier lisse selon une ou plusieurs des revendications précédentes, **caractérisé en ce que** la taille de grain caractéristique η est comprise entre 75 et 95 μm, en particulier entre 75 et 90 μm, et **en ce que** le paramètre de forme β est au moins égal à 4,5, en particulier au moins égal à 5,0, en particulier au moins égal à 5,2, en particulier au moins égal à 5,5.

5. Matériau composite pour palier lisse selon une ou plusieurs des revendications précédentes, **caractérisé en ce que** l'épaisseur de couche (22) de la couche de support poreuse (6) est d'au plus 190 μm et

en particulier d'au plus 180 μm.

6. Matériau composite pour palier lisse selon une ou plusieurs des revendications précédentes, **caractérisé en ce que** la saillie (14) du matériau de couche lisse (8) sur la couche de support poreuse (6) forme une couche d'entrée et est de 5 à 70 μm, en particulier de 5 à 50 μm et en particulier de 5 à 30 μm.

7. Matériau composite pour palier lisse selon la revendication 6, **caractérisé en ce que** l'épaisseur (22) de la couche de support poreuse (6) est de 130 à 180 μm, et **en ce que** l'épaisseur de la saillie (14) du matériau de couche lisse (8) sur la couche de support poreuse est de 5 à 20 μm.

8. Matériau composite pour palier lisse selon une ou plusieurs des revendications précédentes, **caractérisé en ce que** la saillie (14) du matériau de couche lisse (8) sur la couche de support poreuse (6) forme une couche de roulement et est d'au moins 50 μm, notamment d'au moins 70 μm et d'au plus 350 μm, en particulier d'au plus 300 μm et plus particulièrement d'au plus 250 μm.

9. Matériau composite pour palier lisse selon la revendication 8, **caractérisé en ce que** l'épaisseur (22) de la couche de support (6) poreuse est de 130 à 180 μm, et **en ce que** l'épaisseur (20) de la saillie (14) du matériau de couche de glissement (8) sur la couche de support (6) poreuse est de 80 à 150 μm, en particulier de 80 à 130 μm, en particulier de 80 à 120 μm, en particulier de 90 à 110 μm.

10. Matériau composite pour palier lisse selon une ou plusieurs des revendications précédentes, **caractérisé en ce que** la base polymère est du PTFE, du PEEK, du PVDF, du PA, du PPA, du PPS ou du POM.

11. Procédé de fabrication d'un matériau composite pour palier lisse (2) selon l'une ou plusieurs des revendications précédentes, comprenant une couche d'appui métallique (4), composée en particulier d'acier ou d'un alliage de cuivre, une couche de support poreuse (6), composée en particulier de bronze, et un matériau de couche lisse (8) à base de polymère, contenant éventuellement des charges (10) agissant sur les caractéristiques tribologiques, dont est imprégnée la couche de support poreuse (6) et qui forme une saillie (14) au-dessus de la couche de support poreuse (6), dans lequel la couche de support (6) est une couche frittée (16) composée de particules (18) frittées les unes avec les autres ou avec la couche d'appui (4), **caractérisé en ce que** pour former la couche de support poreuse (2), 6), des particules (18) d'une poudre sont utilisées, dont au moins 90 % en masse présentent une taille de particule comprise entre 45 et 125 μm et au plus 4 % en masse présentent une taille de particule supérieure à 125 $\mu$m et au plus 8 % en masse présentent une taille de particule inférieure à 45 $\mu$m, et dans lequel la taille de particule des particules frittées (18) formant la couche de support (6) suit une distribution de taille de particule selon l'équation $R = e^{-\left(\frac{t}{\eta}\right)^{\beta}}$ dans laquelle R est un résidu de tamisage cumulatif dans une investigation de résidu de tamisage et t est une taille de maille respective dans l'investigation de résidu de tamisage, et **en ce que** la taille de grain caractéristique $\eta$ est comprise entre 75 et 100 $\mu$m, et dans laquelle le paramètre de forme $\beta$ est d'au moins 5,0, et dans laquelle la porosité de la couche de support (6) est d'au moins 35 % et d'au plus 55 %, et **en ce que** la poudre pour former la couche de support poreuse (6) est dispersée en une couche mince sur la couche d'appui métallique (4) puis frittée sur celle-ci, de sorte que la couche de support poreuse (6) est formée avec une épaisseur (22) de 130 à 200 $\mu$m, et **en ce que** le matériau de couche lisse à base de polymère (8) est imprégné dans la couche de support poreuse (6), dans lequel la saillie (14) est également formée sur la couche de support poreuse (6).

12. Procédé selon la revendication 11, **caractérisé en ce que** pour former la couche de support poreuse (6), des particules (18) d'une poudre sont utilisées, dont au moins 75 % en masse, de préférence au moins 80 % en masse, présentent une taille de particule comprise entre 63 et 125 $\mu$m.

13. Elément de palier lisse réalisé en un matériau composite pour palier lisse selon une ou plusieurs des revendications 1 à 10.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2787227 B1
- DE 102004008633 A1
- WO 2012162258 A1
- US 3376183 A
- EP 0581185 A1
- GB 2356226 A
- JP 2013083304 A
- EP 2400175 A1